# EUROPÄISCHE PATENTSCHRIFT

(11) **EP 0 892 732 B1**
(45) Veröffentlichungstag und Bekanntmachung des Hinweises auf die Patenterteilung: **02.05.2002**
(21) Anmeldenummer: 97948729.5
(22) Anmeldetag: 07.11.1997
(51) Int. Cl.: B60T 8/00

(54) **VERFAHREN UND VORRICHTUNG ZUR STEUERUNG DER BREMSKRAFTVERTEILUNG BEI EINEM KRAFTFAHRZEUG**
METHOD AND DEVICE FOR CONTROLLING BRAKING FORCE DISTRIBUTION IN A MOTOR VEHICLE
PROCEDE ET DISPOSITIF PERMETTANT DE COMMANDER LA REPARTITION DE LA FORCE DE FREINAGE D'UN VEHICULE AUTOMOBILE

(30) Priorität: 14.02.1997 DE 19705619
(43) Veröffentlichungstag der Anmeldung: 27.01.1999
(73) Patentinhaber: ROBERT BOSCH GMBH, 70442 Stuttgart (DE)
(72) Erfinder: DIEHLE, Stefan, D-70825 Korntal-Münchingen (DE); STREHLE, Alfred, D-70736 Fellbach (DE)
(86) Internationale Anmeldenummer: DE9702594
(87) Internationale Veröffentlichungsnummer: WO9835864

(56) Entgegenhaltungen:
- DE-A- 4 414 980
- DE-C- 4 401 995

## Beschreibung

### Stand der Technik

Die Erfindung betrifft ein Verfahren und eine Vorrichtung zur Steuerung der Bremskraftverteilung bei einem Kraftfahrzeug gemäß den Oberbegriffen der unabhängigen Patentansprüche.

Aus der DE 41 12 388 A1 (US-Patent 5,281,012) ist ein Verfahren und eine Vorrichtung zur Regelung bzw. Steuerung der Bremskraftverteilung bei einem Kraftfahrzeug auf der Basis der Radgeschwindigkeiten der Vorder- und Hinterräder bekannt. Fällt diese elektronische Steuerung aus irgendeinem Grunde aus, kann es infolge der überbremsten Hinterachse in einigen Bremssituationen zu ungewollten Fahrsituationen kommen.

Daher wurde beispielsweise in der DE 1 95 11 152 A1 ein Notlauf vorgeschlagen für den Fall, daß gleichzeitig zwei Geschwindigkeitssensoren ausgefallen sind. Dabei wird an den Hinterradbremsen durch abwechslungsweisen Druckaufbau und Druckabbau ein Sättigungsdruckwert eingestellt, welcher unterhalb des vom Fahrer vorgegebenen Vordrucks sich befindet.

Aus der DE 1 95 11 161 A1 und der DE 1 95 11 162 A1 sind weitere Maßnahmen zur Steuerung bzw. Regelung der Bremskraftverteilung zwischen Vorder- und Hinterachse eines Kraftfahrzeugs im Fehlerfall beschrieben.

Bei der DE 1 95 11 161 A1 wird die Bremskraftverteilungsregelung bei Fehlern innerhalb der Steuereinheit abgeschaltet, ansonsten bei Einzelfehlern zumindest in eingeschränktem Umfang weiterbetrieben. Beispielsweise wird bei Defekt eines Geschwindigkeitssensors an einem Hinterrad oder an einem Vorderrad die Regelung auf der Basis eines Ersatzsignals weitergeführt. Eine Weiterführung der Regelung findet auch statt bei Defekten an einem Stellglied, die zu einem ungeminderten Bremskraftaufbau an einem Vorderrad führen, bei Fehlern im Bereich der Rückförderpumpe, bei Fehlern an einem Stellglied, die zu einer fehlenden Möglichkeit einer Bremskraftreduzierung führen, oder bei Unterspannung. Bei Defekten an einem Stellglied, die zu einem fehlenden Bremskraftaufbau an einem Vorderrad führen, sowie bei Defekten an einem Stellglied, die zu einem ungeminderten Bremskraftaufbau an einem Hinterrad führen, wird der Regler passiv geschaltet.

In der DE 1 95 11 162 A1 werden Notlaufmaßnahmen einer Bremskraftverteilungsregelung bei fehlerbehafteten Drehzahlsignalen dargestellt. Dabei wird im Fehlerfall eines Vorderraddrehzahlsignals der Regelung das funktionstüchtige Vorderraddrehzahlsignal zugrundegelegt oder das schnellste aller verbliebenen Räder herangezogen, im Fehlerfall eines Hinterraddrehzahlfühlers als Ersatzsignal das Fahrgeschwindigkeitsreferenzsignal verwendet. Ferner wird die Empfindlichkeit des Bremskraftverteilungsreglers im Fehlerfall erhöht.

Methoden zur Fehlererkennung sind beispielsweise in dem SAE-Paper 890870 "Electronic Control Unit of the Sumitomo Electronic Antilock System" beschrieben.

Die bekannten Vorgehensweisen zur Aufrechterhaltung der Bremskraftverteilungsregelung bzw. -Steuerung im Fehlerfall beherrschen zuverlässig und wirkungsvoll die dort beschriebenen Einzelfehler. Detaillierte Notlaufmaßnahmen des Bremskraftverteilungreglers werden nicht beschrieben, insbesondere bei einem Fehler des Bremspedalschalters, dessen Stellung als Anzeichen für einen Bremsvorgang und damit zur Aktivierung des Reglers ausgewertet wird.

Es ist Aufgabe der Erfindung, die Regelung der Bremskraftverteilung zwischen Vorder- und Hinterachse bei einem Kraftfahrzeug im Fehlerfall zu optimieren.

Dies wird durch die kennzeichnenden Merkmale der unabhängigen Patentansprüche erreicht.

### Vorteile der Erfindung

Die erfindungsgemäße Vorgehensweise optimiert den Notlauf einer Bremskraftverteilungsregelung bei einem Kraftfahrzeug.

Besonders vorteilhaft ist, daß auch der Fehlerfall eines Bremspedalschalters beherrschbar ist und die Bremskraftverteilungsregelung auch in diesem Fall weitergeführt werden kann.

Besonders vorteilhaft ist ferner, daß durch eine Druckaufbaupulsreihe bei nicht vorhandenem Reglereingriff ein zu schnelles Einsteuern von Bremsdruck in die Hinterradbremsen und die damit verbundene Gefahr einer überbremsten Hinterachse vermieden wird.

Besonders vorteilhaft ist ferner, daß auch bei einer nicht zum Abschalten des Systems führenden Unterspannung, bei einem Fehler der Rückförderpumpe und/oder bei einem Fehler in einem Auslaßventil an der Hinterachse eine Regelung der Bremskraftverteilung durch entsprechende Betätigung des Einlaßventils durchgeführt wird. Dabei ist von Vorteil, daß auch hier eine Druckanstiegsgradientenbegrenzung vorgesehen ist, um ein zu schnelles Einsteuern von Druck in die Hinterradbremsen zu verhindern.

Besonders vorteilhaft ist ferner, daß bei einem Fehler eines Drehzahlfühlers als Ersatzsignal das Drehzahlsignal der gleichen Fahrzeugseite verwendet wird, während im Fehlerfall von zwei Drehzahlfühlern die aus dem Stand der Technik bekannte Druckbegrenzung vorgenommen wird. Besonders vorteilhaft in diesem Zusammenhang ist, daß beim Fahrzeugstillstand die Begrenzung aufgehoben und ein weiterer Druckaufbau, bei maximal zum Fahrervordruck, erlaubt wird, so daß der Fahrzeugstillstand sicher beherrscht wird.

Weitere Vorteile ergeben sich aus der nachfolgenden Beschreibung von Ausführungsbeispielen bzw. aus den abhängigen Patentansprüchen.

### Zeichnung

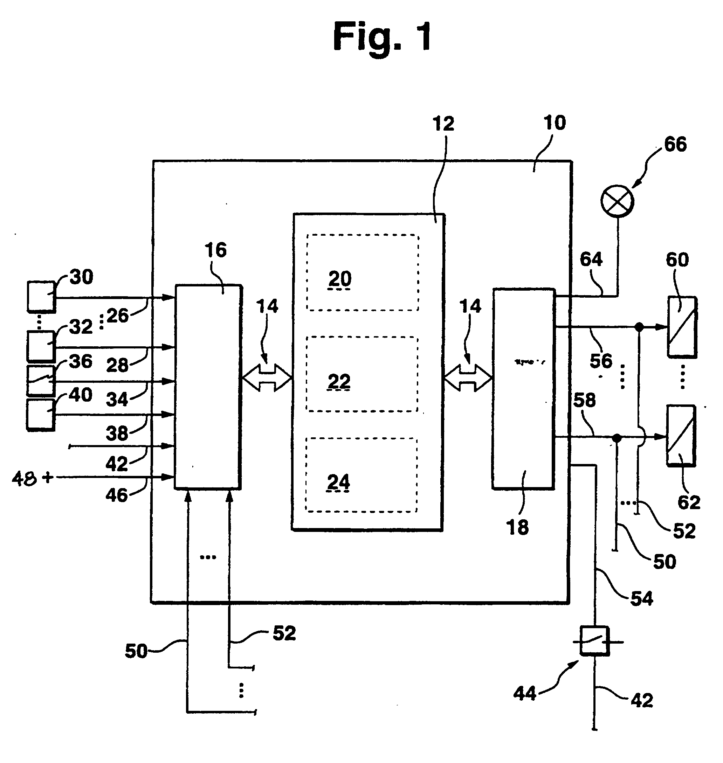

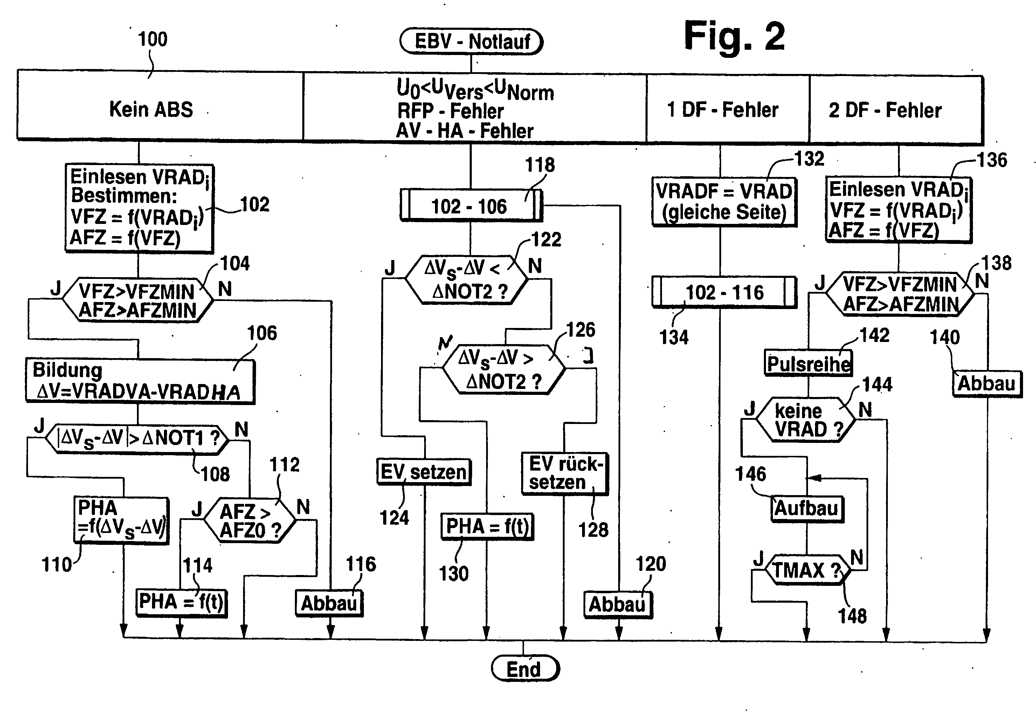

Die Erfindung wird nachfolgend anhand der in der Zeichnung dargestellten Ausführungsbeispielen näher erläutert. Dabei zeigt Figur 1 ein Übersichtsblockschaltbild eines Bremssystems, während in Figur 2 ein Flußdiagramm dargestellt ist, welches eine Realisierung der Bremskraftverteilungsregelung in ausgewählten Fehlerfällen als Programm eines Rechners skizziert.

### Beschreibung von Ausführungsbeispielen

Figur 1 zeigt ein Übersichtsblockschaltbild eines Bremssystems, bei welchem die erfindungsgemäße Vorgehensweise zum Einsatz kommt. Dabei ist mit 10 eine Steuereinheit dargestellt, welche aus wenigstens einem Mikrocomputer 12 aufgebaut ist. Dieser ist über ein Bussystem 14 mit einem Eingangs- 16 und einem Ausgangsbaustein 18 zum Datenaustausch verknüpft. Der Mikrocomputer 12 enthält in einem bevorzugten Ausführungsbeispiel einen Antiblockierregler 20, einen Bremskraftverteilungsregler 22 sowie eine Fehlerermittlungseinheit 24. Die prinzipielle Funktionsweise dieser Regler bzw. der Fehlerermittlungseinheit ist aus dem eingangs genannten Stand der Technik bekannt.

Dem Eingangsbaustein 16 werden Eingangsleitungen 26 bis 28 von den Radgeschwindigkeitsfühlern (Drehzahlfühlern) 30 bis 32, eine Eingangsleitung 34 von einem Bremspedalschalter 36, eine Eingangsleitung 38 von einer Rückförderpumpe 40 der Bremsanlage und eine Leitung 42 vom Ventilrelais 44 zugeführt. Über die Leitungen 38 bis 42 werden zur Überwachung geeignete Potentiale der entsprechenden Komponenten oder Fehlerinformationen zugeführt. Eine Eingangsleitung 46 verbindet den Eingangsbaustein 16 mit einer Spannungsversorgung 48. Ferner werden diesem Leitungen 50 bis 52 zugeführt, welche die zur Überwachung der Ein- und Auslaßventile notwendigen Signalgrößen herbeiführen. Diese Leitungen umfassen auch entsprechende Signalgrößen von Ventilen zur Durchführung einer Antriebsschlupfregelung und/oder einer Fahrdynamikregelung (Ansaugventil, Umschaltventil). Vom Ausgangsbaustein 18 der Steuereinheit 10 führt eine erste Ausgangsleitung 54 zum Ventilrelais 44, Ausgangsleitungen 56 bis 58 zu den Stellgliedern 60 bis 62 der einzelnen Radbremsen sowie mindestens eine weitere Ausgangsleitung 64 zu mindestens einer Warnlampe 66.

Im Normalbetrieb des Bremssystems löst der Antiblockierregler bei Blockierneigung wenigstens eines der Räder die Bremse durch definiertes Ansteuern der zugeordneten Stellglieder. Bei hydraulischen oder pneumatischen Bremsanlagen sind unter Stellgliedern z.B. Ein- und Auslaßventile zu verstehen. Die Blockierneigung wird dabei im bevorzugten Ausführungsbeispiel anhand der Abweichung der Drehzahl des betreffenden Rades von einer aus wenigstens einer Raddrehzahl gebildeten Referenzgeschwindigkeit erkannt. Bevor dieser sogenannte ABS-Fall eintritt, wird durch den Bremskraftverteilungsregler gewährleistet, daß die Hinterradbremsen nicht überbremsen, das heißt die Räder der Hinterachse nicht vor den Rädern der Vorderachse blockieren. Dies erfolgt im bevorzugten Ausführungsbeispiel gemäß dem eingangs genannten Stand der Technik. Danach wird durch Ansteuern von Stellgliedern der Hinterradbremsdruck so eingestellt, daß das langsamste Hinterrad um einen vorgegebenen Differenzbetrag langsamer läuft als das schnellste Vorderrad. Auf diese Weise wird vermieden, daß die Hinterräder in einem Betriebsbereich geraten, in welchem sie zum Blockieren neigen. Es wird demnach eine Begrenzung der Hinterradbremskraft durchgeführt, welche zumindest bei einigen Bremsanlagen bereits im Teilbremsbereich zu einer Abweichung von der durch die Bremsanlage vorgegebenen Bremskraftverteilung zwischen Vorder- und Hinterachse führen.

Die Fehlerermittlungseinheit überprüft die Funktionsweise des Mikrocomputers sowie der weiteren Bestandteile der Steuereinheit 10 und ermittelt die Funktionsfähigkeit der externen Komponenten, insbesondere der Drehzahlfühler 30 bis 32, des Ventilrelais 44, der Rückförderpumpe 40 und der Stellglieder 60 bis 62 sowie das Niveau der Versorgungsspannung prüft. Wird ein Fehlerfall erkannt, so steuert der Mikrocomputer 12 zumindest bei einigen Fehlerzuständen zur Fahrerinformation die Warnlampe 66 an. Ferner werden der Antiblokkierregler und/oder der Bremskraftverteilungsregler deaktiviert, teilweise deaktiviert oder in ihrer Funktion aufrechterhalten.

Grundsätzlich wird bei Vorliegen von Doppelfehlern außer bei Vorliegen von Doppelfehlern im Bereich der Drehzahlfühler der Bremskraftverteilungsregler (EBV) abgeschaltet. Bei Einzelfehlern wird eine fehlerindividuelle Notlaufreaktion durchgeführt. Ausnahmen sind Defekte in zwei Drehzahlfühlern, im Bremslichtschalter, bei Unterspannung, bei Ventilrelaiskleber und bei einem Notrad. In diesen Fällen arbeitet der EBV-Regler im Notlauf.

Der EBV-Notlauf wird dann eingeleitet, wenn wenigstens einer der unten beschriebenen Einzelfehler vorliegt oder der Antiblockierregler nicht zur Verfügung steht. Im letzteren Fall ist als Notlaufmaßnahme für den Bremskraftverteilungsregler der Einsatz der Regelung nicht mehr von der Stellung des Bremspedalschalters, sondern vom Überschreiten eines vorgegebenen Grenzwertes durch die Fahrzeuggeschwindigkeit und die Fahrzeugverzögerung abhängig. Während der Bremsung findet die aus dem Stand der Technik bekannte Regelung statt, wobei bei größeren Verzögerungen und nicht eingreifender Regelung eine Druckanstiegsbegrenzungsfunktion für den Hinterradbremsdruck eingeleitet wird. Dazu wird der Hinterradbremsdruck nach einer vorgegebenen zeitlichen Rampe erhöht, beispielsweise durch Abgabe von Pulsen vorbestimmter Länge, die zu einem zeitlich rampenförmig aufsteigenden Bremsdruckverlauf an den Hinterrädern führen. Dadurch wird ein zu schnelles Einsteuern von Bremsdruck und ein Überbremsen der Hinterräder vermieden.

Der Bremskraftverteilungsregler wird im Rahmen eines Notlaufes weitergeführt bei Unterspannung in einem Bereich oberhalb eines unteren Grenzwertes, bei Fehler an einem oder zwei Drehzahlfühler, bei Kleben der Kontakte des Ventilrelais, bei Fehlern an der oder einer der Rückförderpumpen, bei Kurzschluß nach Versorgungsspannung eines Einlaß- oder Auslaßventils eines Vorderrads oder bei Ventilabriß und bei Fehlern an einem Auslaßventil eines Hinterrads.

Eine sofortige Abschaltung des Bremskräftverteilungsreglers findet statt bei Überspannung, wenn die Versorgungsspannung einen vorgegebenen Schwellwert überschreitet, bei Unterspannung, wenn die Versorgungsspannung den unteren Grenzwert unterschreitet, bei internen Fehlern im Steuergerät, bei Unterbrechung des Ventilrelais, bei Kurzschluß nach Masse an einem Einlaß- oder Auslaßventil eines Vorderrads und bei Fehlern an einem Einlaßventil eines Hinterrads. Ansaug- und Umschaltventil werden wie die anderen Ventile (Abschalten bei Schluß nach Masse, Notlauf bei Abriß und Schluß nach Ubatt) behandelt.

Im Flußdiagramms nach Figur 2 werden die im Notlauf des Reglers durchgeführten Maßnahmen näher beschrieben.

Das in Figur 2 dargestellte Programm für den Notlauf eines Bremskraftverteilungsreglers (EBV) wird immer dann eingeleitet, wenn kein Normalbetrieb vorliegt und kein Fehler vorliegt, welcher zur Abschaltung des Bremskraftverteilungsreglers führt. Im ersten Schritt 100 wird abhängig vom erkannten Fehlerzustand vorgesehene Notlaufmaßnahme ausgewählt. Für den Fall, daß der Antiblockierregler (ABS) nicht zur Verfügung steht, wird im Schritt 102 die Radgeschwindigkeiten Vradi der Räder des Kraftfahrzeugs eingelesen und auf der Basis dieser Radgeschwindigkeiten die Fahrzeuggeschwindigkeit ermittelt. Die Fahrzeuggeschwindigkeit VFZ wird in einem bevorzugten Ausführungsbeispiel zumindest im Notlauf aus der zweitschnellsten Radgeschwindigkeit gebildet. Aus der ermittelten Fahrzeuggeschwindigkeit VFZ wird dann vorzugsweise durch zeitliche Ableitung die Fahrzeugverzögerung AFZ berechnet. Durch geeignete Filtermaßnahmen werden die beiden berechneten Signale steigungsbegrenzt. Im darauffolgenden Schritt 104 wird anhand der Signale VFZ und AFZ überprüft, ob ein Bremsvorgang vorliegt. Dies ist dann der Fall, wenn die Fahrzeugverzögerung größer als eine Minimalgeschwindigkeit VFZmin und die Fahrzeugverzögerung größer als eine Minimalverzögerung AFZmin ist. Ist dies nicht der Fall, werden gemäß Schritt 116 die Stellglieder an den Hinterrädern derart angesteuert, daß ein Druckabbau entsprechend der Fahrervorgabe erlaubt ist. Wurde im Schritt 104 ein Bremsvorgang erkannt, wird im Schritt 106 die Abweichung ΔV zwischen dem schnellsten Vorderrad VRADVA und dem langsamsten Hinterrad VRADHA gebildet. Diese Abweichung wird im darauffolgenden Schritt 108 mit einem Sollwert ΔVS verglichen. Über- oder unterschreitet die Abweichung ΔV den Sollwert um eine vorbestimmte Größe ΔNOT1, so wird gemäß Schritt 110 der Druck an den Hinterradbremsen durch Betätigen der Einund/oder Auslaßventile nach Maßgabe der Differenz zwischen Soll- und Istwert eingestellt, derart, daß die Differenz zwischen Soll- und Istwert innerhalb des vorgegebenen Toleranzbereiches ΔNOT1 liegt. Dabei ist vorgesehen, daß im Vergleich zum fehlerfreien Betrieb des Bremskraftreglers der Toleranzbereich ΔNOT1 betragsmäßig kleiner ist, so daß die Regelung insgesamt empfindlicher ausgestaltet ist. Befindet sich die Differenz zwischen Soll- und Istwert innerhalb des Toleranzbereichs, so wird an den Hinterradbremsen Bremsdruck gemäß der Fahrervorgabe aufgebaut. Überschreitet allerdings gemäß Schritt 112 die Fahrzeugverzögerung AFZ einen vorbestimmten Grenzwert AFZ0, der oberhalb des Minimalgrenzwertes AFZmin liegt, so wird gemäß Schritt 114 der Druck an den Hinterradbremsen gemäß einer vorgegebenen Zeitfunktion aufgesteuert. Im bevorzugten Ausführungsbeispiel wird dies durch eine Pulsreihe mit vorgegebenen Pulslängen und Pulspausen realisiert. Dadurch wird ein langsamerer Druckanstieg an den Hinterrädern durch Begrenzung des Druckanstiegs erreicht, so daß bei großen Verzögerungen und somit bei starken Bremspedalbetätigungen durch den Fahrer der Druckaufbau an der Hinterachse nicht zu schnell erfolgt und die Hinterachse überbremst. Durch das zyklische Durchlaufen des in Figur 2 dargestellten Programms wird diese Pulsreihe beendet, wenn entweder Schritt 108 die Regelung einsetzt oder gemäß Schritt 112 die Fahrzeugverzögerung den Grenzwert (vorzugsweise plus eine Hysteresebreite) fällt.

Wird im Schritt 100 eine Versorgungsspannung, die zwischen der Normalspannung und unteren Grenzwert liegt (Unterspannung), oder ein Fehler in der Rückförderpumpe oder ein Fehler in einem Auslaßventil einer Hinterradbremse identifiziert, wird in einem Schritt 118 zunächst die vorher geschilderten Schritte 102 bis 106 zur Bestimmung der Fahrzeuggeschwindigkeit, der Fahrzeugverzögerung, eines Bremsvorgangs und des Istwerts ΔV durchgeführt. Hat Schritt 104 ergeben, daß kein Bremsvorgang vorliegt, wird gemäß Schritt 120 die Stellglieder der Hinterräder derart eingestellt, daß ein Druckabbau ist. Während eines Bremsvorgangs bei Vorliegen eines der oben skizzierten Fehler wird im Schritt 122 die Differenz zwischen Soll- und Istwert gebildet und bei Überschreiten eines Toleranzwerts ΔNOT2 gemäß Schritt 124 die Einlaßventile der Hinterräder geschlossen (EV setzen). Ist die Differenz zwischen Soll- und Istwert größer als der Toleranzwert ΔNOT2 (Schritt 126), so sind die Hinterräder langsamer als die Vorderräder, so daß gemäß Schritt 128 das Einlaßventil zum Druckaufbau geöffnet werden kann (EV rücksetzen). Befindet sich die Differenz innerhalb des Toleranzbereichs ΔNOT2, so wird gemäß Schritt 130 analog zum Schritt 114 der Hinterradbremsdruck im Rahmen einer Pulsreihe aufgebaut. Auslaßventile und Rückförderpumpe werden bei Vorliegen eines der obengenannten Fehler nicht betätigt.

Wird im Schritt 100 erkannt, daß ein Drehzahlfühler defekt ist, so wird im Schritt 132 das fehlerhafte Radsignal VradF ersetzt durch das Radgeschwindigkeitssignal Vrad der gleichen Seite. Danach werden gemäß Schritt 134 die Schritte 102 bis 116 entsprechend durchgeführt.

Für den Fall, daß im Schritt 100 ein Fehler von zwei Drehzahlfühlern erkannt wird, wird im Schritt 136 entsprechend zu Schritt 102 die Fahrzeuggeschwindigkeit auf der Basis der zweitschnellsten Radgeschwindigkeit und die Fahrzeugverzögerung AFZ auf der Basis der Fahrzeuggeschwindigkeit VFZ gebildet. Im darauffolgenden Schritt 138 wird analog zu Schritt 104 der Bremsvorgang anhand von Vergleichen der Fahrzeuggeschwindigkeit VFZ und der Fahrzeugverzögerung AFZ mit Minimalwerten erkannt. Liegt kein Bremsvorgang vor, so werden gemäß Schritt 140 die Ventile derart eingestellt, daß ein Bremsdruckabbau ermöglicht ist. Liegt ein Bremsvorgang vor, wird gemäß Schritt 142 an der Hinterachse eine Druckbegrenzung durchgeführt wie aus dem eingangs genannten Stand der Technik bekannt. Kommt in diesem Fall das Fahrzeug zum stehen, liegen keine Radgeschwindigkeitssignale mehr vor. Wird dies im Schritt 144 erkannt, so wird im Schritt 146 eine Aufbaupulsreihe eine Hinterachse mit begrenzter Pulslänge gestartet. Dadurch wird an der Hinterachse über die Begrenzung hinaus Druck aufgebaut, um das Fahrzeug im Stillstand zu halten. Im darauffolgenden Schritt 148 wird in einem vorteilhaften Ausführungsbeispiel die seit Beginn der Druckaufbaupulsreihe verlaufenden Zeit mit einem Maximalwert Tmax verglichen. Ist der Maximalwert nicht erreicht, wird gemäß Schritt 146 weiter Druck aufgebaut, andernfalls der Programmteil beendet.

Die Maximalzeit ist eine Alternative. In einem anderen Ausführungsbeispiel wird darauf verzichtet und die Pulsreihe solange fortgesetzt, bis der Fahrervordruck erreicht ist. Alternativ dazu steht ein Druckhalten an der Hinterachsbremse, bis anhand des Bremspedalschalters ein Lösen des Bremspedals erkannt wurde.

Die beschriebene Lösung wird in vorteilhafter Weise bei hydraulischen oder pneumatischen Bremsanlagen eingesetzt. Darüber hinaus wird die skizzierte Lösung auch bei Bremsanlagen mit den beschriebenen Vorteile auch bei Bremsanlagen mit elektrischer Zuspannung eingesetzt. Dabei ist anstelle des Bremsdrucks die bei derartigen Bremsanlagen geregelte Größe Bremskraft oder Bremsmoment einzusetzen. Ferner sind die Bezüge auf hydraulischen Komponenten für die Anwendung bei pneumatischen oder elektromechanischen Bremsanlagen wegzulassen bzw. entsprechend zu modifizieren.

Unter Bremskraft wird im Rahmen der Beschreibung der erfindungsgemäßen Lösung Bremsdruck, Bremsmoment, etc. verstanden.

## Patentansprüche

1. Verfahren zur Steuerung der Bremskraftverteilung bei einem Kraftfahrzeug, wobei ein Bremskraftverteilungsregler (22) vorgesehen ist, der auf der Basis der Radgeschwindigkeiten (VRADi) der Vorder- und Hinterräder die Bremskraftverteilung zwischen Vorderund Hinterachse regelt, wobei im Fehlerfall ein Notlauf des Bremskraftverteilungsreglers (22) aktiviert wird, **dadurch gekennzeichnet, dass** im Rahmen des Notlaufs des Bremskraftverteilungsreglers (22) die Bremskraftverteilungsregelung abhängig vom Fehlerfall, der Fahrzeuggeschwindigkeit (VFZ) und der Fahrzeugverzögerung (AFZ) erfolgt.

2. Verfahren nach Anspruch 1, **dadurch gekennzeichnet, daß** bei großen Verzögerungen der Hinterradbremsdruck im Rahmen des Notlaufes nach einer vorgegebenen Bremskraftanstiegsfunktion aufgebaut wird.

3. Verfahren nach einem der vorhergehenden Ansprüche, **dadurch gekennzeichnet, daß** der Notlauf dann eingeleitet wird, wenn ein Antiblockierregler nicht zur Verfügung steht oder bestimmte Einzelfehler erkannt wurden.

4. Verfahren nach einem der vorhergehenden Ansprüche, **dadurch gekennzeichnet, daß** im Notlauf aus der Differenz der Geschwindigkeiten des schnellsten Vorderrades und des langsamsten Hinterrades ein Istwert gebildet wird, der mit einem Sollwert verglichen wird und bei Überschreiten eines vorgegebenen Toleranzbereichs für den Notlauf eine Regelung der Hinterradbremskraft im Sinne einer Einregelung des Istwertes in den Toleranzbereich vorgenommen wird.

5. Verfahren nach einem der vorhergehenden Ansprüche, **dadurch gekennzeichnet, daß** außerhalb der Regelung eine Bremskraftanstiegsbegrenzungsfunktion vorgesehen ist.

6. Verfahren nach einem der vorhergehenden Ansprüche, daß bei Unterspannung oder bei Fehlern in der Rückförderpumpe oder bei Fehlern in einem der Auslaßventile eines Hinterrades die Bremskraftverteilungsregelung ausschließlich durch Betätigen der den Hinterrädern zugeordneten Einlaßventile durchgeführt wird.

7. Verfahren nach einem der vorhergehenden Ansprüche, **dadurch gekennzeichnet, daß** im Fehlerfall eines Drehzahlfühlerfehlers das Drehzahlsignal durch das Drehzahlsignal des Rades auf der gleichen Fahrzeugseite ersetzt wird.

8. Verfahren nach einem der vorhergehenden Ansprüche, **dadurch gekennzeichnet, daß** die Fahrzeuggeschwindigkeit auf der Basis des Drehzahlsignals des zweitschnellsten Rades des Fahrzeugs ermittelt wird.

9. Verfahren nach einem der vorhergehenden Ansprüche, **dadurch gekennzeichnet, daß** bei Fehlern in zwei Drehzahlfühlern eine Bremskraftbegrenzung an den Hinterradbremsen durchgeführt wird, wobei im Fahrzeugstillstand die Bremskraft gehalten oder eine Bremskraftaufbaufunktion eingeleitet wird.

10. Vorrichtung zur Steuerung der Bremskraftverteilung bei einem Kraftfahrzeug, mit einer Steuereinheit (10), die einen Bremskraftverteilungsregler (22) umfasst, der auf der Basis der Drehzahlsignale (VRADi) der Vorder- und Hinterräder die Bremskraft zwischen den Vorderachsen und den Hinterachsen des Fahrzeugs verteilt, die ferner Fehlererkennungsmittel (24) umfasst, die einen Fehlerzustand im Bereich der Bremsanlage erkennen und Notfallmaßnahmen für den Bremskraftverteilungsregler (22) einleiten, **dadurch gekennzeichnet, dass** die Steuereinheit (10) ferner Notlaufmittel (100-148) für den Bremskraftverteilungsregler (22) umfasst, wobei im Notlauf die Bremskraftverteilungsregelung abhängig vom Fehlerfall und bei Überschreiten vorgegebener Minimalwerte (VFZMIN, AFZMIN) durch die Fahrzeuggeschwindigkeit (VFZ) und die Fahrzeugverzögerung (AFZ) erfolgt.

## Claims

1. Method for controlling the proportioning of braking force in a motor vehicle, a braking force proportioning controller (22) being provided which controls the proportioning of braking force between the front and rear axles on the basis of the wheel speeds (VRADi) of the front and rear wheels, an emergency operating mode of the braking force proportioning controller (22) being activated in the event of a fault, **characterized in that**, within the scope of the emergency operating mode of the braking force proportioning controller (22), the braking force proportioning control is carried out as a function of the fault, the velocity (VFZ) of the vehicle and the deceleration (AFZ) of the vehicle.

2. Method according to Claim 1, **characterized in that** in the event of large decelerations, the rear-wheel brake pressure is increased within the scope of the emergency operating mode in accordance with a predefined braking force increasing function.

3. Method according to one of the preceding claims, **characterized in that** the emergency mode is initiated if an anti-lock brake controller is not available or specific individual faults have been detected.

4. Method according to one of the preceding claims, **characterized in that**, in the emergency operating mode, an actual value is formed from the difference between the speeds of the fastest front wheel and the slowest rear wheel, said actual value being compared with a setpoint value and, if a predefined tolerance range for the emergency operating mode is exceeded, the rear-wheel braking force is controlled with the effect of adjusting the actual value to within the tolerance range.

5. Method according to one of the preceding claims, **characterized in that** a function which limits the increase in the braking force is provided outside the control.

6. Method according to one of the preceding claims, **characterized in that** in the case of undervoltage or in the case of faults in the recirculating pump or in the case of faults in one of the outlet valves of a rear wheel, the braking force proportioning control is carried out exclusively by actuating the inlet valves assigned to the rear wheels.

7. Method according to one of the preceding claims, **characterized in that** in the event of a fault in a rotational speed sensor the rotational speed signal is replaced by the rotational speed signal of the wheel on the same side of the vehicle.

8. Method according to one of the preceding claims, **characterized in that** the velocity of the vehicle is determined on the basis of the rotational speed signal of the second fastest wheel of the vehicle.

9. Method according to one of the preceding claims, **characterized in that** in the event of faults in two rotational speed sensors the braking force at the rear-wheel brakes is limited, the braking force being maintained or a function which increases the braking force being initiated when the vehicle is stationary.

10. Device for controlling the proportioning of braking force in a motor vehicle, having a control unit (10) which comprises a braking force proportioning controller (22) which proportions the braking force between the front axles and the rear axles of the vehicle on the basis of the rotational speed signals (VRADi) of the front and rear wheels and also comprises fault-detecting means (24) which detect a fault state in the region of the brake system and initiate emergency measures for the braking force proportioning controller (22), **characterized in that** the control unit (10) also comprises emergency operating means (100-148) for the braking force proportion controller (22), in which case, in the emergency operating mode, the braking force proportioning control is carried out as a function of the fault, and by means of the velocity (VFZ) of the vehicle and the deceleration (AFZ) of the vehicle if predefined minimum values (VFZMIN, AFZMIN) are exceeded.

## Revendications

1. Procédé de commande de la répartition de la force de freinage d'un véhicule automobile à l'aide d'un régulateur de répartition de force de freinage (22) qui régule la répartition de la force de freinage entre l'essieu avant et l'essieu arrière sur la base des vitesses de roues (VRADI) des roues avant et des roues arrières, et en cas de défaut, le régulateur de répartition de force de freinage (22) passe en fonctionnement de secours,
**caractérisé en ce que**
dans le cadre du fonctionnement de secours du régulateur de répartition de force de freinage (22), la régulation de la répartition de la force de freinage se fait, suivant le défaut, en fonction de la vitesse du véhicule (VFZ) et de la décélération du véhicule (AFZ).

2. Procédé selon la revendication 1,
**caractérisé en ce que**
pour des décélérations importantes, on établit la pression de frein des roues arrières dans le cadre du fonctionnement de secours selon une fonction prédéterminée d'augmentation de la force de freinage.

3. Procédé selon l'une quelconque des revendications précédentes,
**caractérisé en ce qu'**
on passe en fonctionnement de secours si l'on ne dispose pas de régulateurs anti-blocage ou si certains défauts isolés sont détectés.

4. Procédé selon l'une quelconque des revendications précédentes,
**caractérisé en ce qu'**
en fonctionnement de secours, à partir de la différence des vitesses de la roue avant la plus rapide et de la roue arrière la plus lente, on forme une valeur réelle que l'on compare à une valeur de consigne, et en cas de dépassement d'une plage de tolérance prédéterminée du fonctionnement de secours, on effectue une régulation de la force de freinage des roues arrières dans le sens d'une régulation de la valeur réelle à l'intérieur de la plage de tolérance.

5. Procédé selon l'une quelconque des revendications précédentes,
**caractérisé en ce qu'**
en dehors de la régulation, il est prévu une fonction de limitation de l'augmentation de la force de freinage.

6. Procédé selon l'une quelconque des revendications précédentes,
**caractérisé en ce qu'**
en cas de sous-tension ou de défaut dans la pompe de refoulement ou de défaut dans l'une des soupapes d'échappement d'une roue arrière, on effectue la régulation de la répartition de la force de freinage exclusivement par l'actionnement des soupapes d'entrée associées aux roues arrières.

7. Procédé selon l'une quelconque des revendications précédentes,
**caractérisé en ce qu'**
en cas de défaut d'un capteur de vitesse de rotation, on remplace le signal de vitesse de rotation par celui de la roue située du même côté du véhicule.

8. Procédé selon l'une quelconque des revendications précédentes,
**caractérisé en ce qu'**
on détermine la vitesse du véhicule sur la base du signal de vitesse de rotation de la seconde roue la plus rapide du véhicule.

9. Procédé selon l'une quelconque des revendications précédentes,
**caractérisé en ce qu'**
en cas de défaut de deux capteurs de rotation, on limite la force de freinage au niveau de freins de roues arrières et à l'arrêt du véhicule, on maintient la force de freinage ou on initie une fonction d'établissement de la force de freinage.

10. Dispositif de commande de la répartition de la force de freinage d'un véhicule automobile comprenant une unité de commande (10) avec un régulateur de répartition de force de freinage (22) qui répartit la force de freinage entre l'essieu avant et l'essieu arrière du véhicule en fonction des signaux de vitesse de rotation (VRADI) des roues avant et des roues arrières, et qui comprend aussi des moyens de détection de défaut (24) qui détectent un état de défaut dans le système de freinage et permettre de prendre des mesures de secours pour le régulateur de répartition de force de freinage (22),
**caractérisé en ce que**
l'unité de commande (10) comprend en outre des moyens de fonctionnement de secours (100-148) pour le régulateur de répartition de force de freinage (22), la régulation de la répartition de la force de freinage en fonctionnement de secours, se faisant en fonction de la nature du défaut, et si la vitesse du véhicule (VFZ) et la décélération du véhicule (AFZ) dépassent des valeurs minimales prédéterminées (VFZMIN, AFZMIN).
